# FASCICULE DE BREVET EUROPEEN

(11) **EP 4 306 295 B1**
(45) Date de publication et mention de la délivrance du brevet: **22.04.2026**
(21) Numéro de dépôt: 23184498.6
(22) Date de dépôt: 10.07.2023
(51) Int. Cl.: B29C 53/56, F16J 15/06

(54) **PROCEDE DE FABRICATION D'UNE EBAUCHE D'UN ARTICLE, NOTAMMENT UNE EBAUCHE DE JOINT DYNAMIQUE D'ETANCHEITE, CONFIGURE POUR EQUIPER UN JOINT TOURNANT D'UNE INSTALLATION D'EXPLOITATION DE FLUIDES, NOTAMMENT SUR UNE PLATEFORME OFFSHORE**
VERFAHREN ZUR HERSTELLUNG EINES ROHLINGS FÜR EINEN GEGENSTAND, INSBESONDERE EINEN DYNAMISCHEN DICHTUNGSROHLING, KONFIGURIERT FÜR EINE DREHVERBINDUNG EINER FLUIDTECHNISCHEN ANLAGE, INSBESONDERE OFFSHORE-PLATTFORM
METHOD FOR MANUFACTURING AN ARTICLE BLANK, IN PARTICULAR A DYNAMIC SEAL BLANK, CONFIGURED TO EQUIP A SWIVEL JOINT OF A FLUID EXPLOITATION RIG

(30) Priorité: 12.07.2022 FR 2207178
(43) Date de publication de la demande: 17.01.2024
(73) Titulaire: ETI Group, 13420 Gémenos (FR)
(72) Inventeur: MENARDO, Philippe, 06310 Beaulieu-sur-Mer (FR)
(74) Mandataire: Santarelli

(56) Documents cités:
- CN-A- 105 937 623
- KR-A- 20170 047 758
- US-B2- 9 605 786
- US-B2- 9 701 058

## Description

### Domaine technique de l'invention

L'invention concerne les installations d'exploitation de fluides, par exemple d'hydrocarbures, par exemple sur des plateformes du type offshore, et notamment les articles, de préférence du type annulaire, qui peuvent être utilisés dans de telles installations.

En particulier, l'invention vise un procédé de fabrication d'une ébauche d'un tel article, dont par exemple une ébauche de joint tournant ou encore une pièce structurelle du joint tournant parmi une partie et/ou une partie mobile par rapport à la partie fixe.

L'invention vise également de telles ébauches d'articles obtenues par la mise en œuvre du procédé.

La demande de brevet coréen KR 2017 0047758 divulgue un outillage pour la fabrication d'un joint par enroulement de bandes.

L'art antérieur CN105937623A concerne une technologie d'étanchéité pour un joint rotatif pour liquides, qui appartient au domaine technique de l'amarrage marin à point unique.

### Etat de la technique

Les dispositifs joint tournant installés dans des installations sous pression peuvent trouver une application dans le domaine offshore, par exemple dans les navires de production pétrolières, permettant notamment l'exploitation de champs d'hydrocarbures en mer. Des unités flottantes de production, de stockage et de déchargement peuvent être formées par un navire qui est mobile, du fait de son environnement, autour d'une tourelle d'amarrage qui est géostationnaire. Le navire peut être assujetti temporairement à la tourelle. Les installations peuvent comporter des conduits qui forment un réseau de canalisations subaquatiques et qui permettent une communication fluidique pour le transfert d'un fluide entre le fond de la mer et le navire.

Pour assurer l'étanchéité entre le navire et la tourelle et ainsi assurer l'intégrité du transfert de fluide, les dispositifs joint tournant sont pourvus d'une première partie, dite fixe, assujettie à la tourelle et d'une deuxième partie, dite mobile, assujettie au navire. La deuxième partie des dispositifs joint tournant est donc mobile en rotation par rapport à la première partie des dispositifs joint tournant. Les dispositifs joint tournant sont en outre pourvus de plusieurs organes d'étanchéité dynamique, dits joints dynamiques, disposés dans des espaces ménagés entre la première partie fixe et la deuxième partie mobile des dispositifs joint tournant.

De tels organes d'étanchéité dynamique peuvent comporter par exemple des lèvres ayant pour fonction d'assurer l'étanchéité face au fluide.

Que ce soit les joints dynamiques ou les parties fixe et mobile, voire d'autres pièces équipant le dispositif joint tournant, une utilisation dans des installations d'exploitation de fluides génère des contraintes en termes de dimensions, souvent grandes, et aussi de matériaux, car ces pièces sont soumises à un environnement hostile, souvent marin, rendant leur fabrication plutôt complexe.

On connaît par exemple un procédé de fabrication dans lequel des ébauches de pièces, ou articles, équipant les dispositifs joint tournant, sont formées par frittage à partir d'une poudre d'un matériau prédéterminé qui est pressée dans un moule puis chauffée jusqu'à une température de transition vitreuse, puis refroidie pour former l'ébauche, aussi appelée brut de fabrication.

On connaît aussi un procédé de fabrication dans lequel des ébauches de pièces, ou articles, sont formées par extrusion à partir de granulés d'un matériau prédéterminé qui sont chauffés puis extraits d'une filière sous forme de spires, ou de secteurs circulaires, par exemple à section rectangulaire, qui sont coupés puis soudés entre eux pour former l'ébauche ou brut de fabrication.

### Exposé de l'invention

L'invention concerne un procédé de fabrication d'une ébauche d'un article configuré pour équiper un joint tournant d'une installation d'exploitation de fluides, notamment sur une plateforme offshore, qui soit simple, commode et économique.

L'invention a ainsi pour objet, sous un premier aspect, un procédé de fabrication d'une ébauche d'un article configuré pour équiper un dispositif joint tournant d'une installation d'exploitation de fluides, notamment sur une plateforme offshore, comportant les étapes suivantes :
- fournir au moins une bande d'un matériau prédéterminé ;
- fournir au moins un support de fabrication au moins partiellement annulaire et ayant un diamètre externe prédéterminé ;
- disposer ladite au moins une bande d'un matériau prédéterminé autour dudit support de fabrication jusqu'à obtenir une épaisseur prédéterminée ;
- retirer le support de fabrication pour obtenir ladite ébauche d'article ayant une section prédéterminée.

Le procédé ci-dessus permet de réaliser de manière simple et commode une ébauche d'un article annulaire prévu pour équiper un dispositif joint tournant, en disposant simplement sur un support dédié, au moins une bande d'un matériau prédéterminé. Il est possible de réaliser une ébauche avec une section personnalisée et prédéterminée.

Des caractéristiques préférées, simples, commodes et économiques du procédé selon l'invention sont présentées ci-après.

Le procédé peut comporter l'étape de fournir une pluralité de bandes de matériaux différents et l'étape de disposer successivement, séquentiellement, ou en parallèle, de manière superposée et/ou juxtaposée, les bandes de matériaux différents sur le support de fabrication.

Le matériau prédéterminé est formé d'au moins un thermoplastique.

Le thermoplastique est composé d'au moins du polyétheréthercétone, dénommé PEEK et/ou matériaux dérivés.

Le thermoplastique est composé aussi d'au moins du polytétrafluoroéthylène, dénommé PTFE et/ou matériaux dérivés.

Le matériau prédéterminé est en outre formé de fibres à hautes résistances et/ou de fils métalliques.

Le procédé peut comporter l'étape de disposer sous-vide ladite au moins une bande d'un matériau prédéterminé autour dudit support de fabrication.

Le procédé peut comporter l'étape de disposer sous une température prédéterminée ladite au moins une bande d'un matériau prédéterminé autour dudit support de fabrication.

Le procédé peut comporter, pendant l'étape de disposer ladite au moins une bande d'un matériau prédéterminé autour dudit support de fabrication, une étape de soudage d'une couche inférieure formée par la bande avec une couche supérieure formée par la bande.

Le procédé peut comporter, pendant l'étape de disposer ladite au moins une bande d'un matériau prédéterminé autour dudit support de fabrication, une étape d'adhérisation d'une couche inférieure formée par la bande avec une couche supérieure formée par la bande.

Le support de fabrication peut être formé en une seule pièce annulaire.

Le support de fabrication peut être formé de plusieurs segments annulaires.

Le procédé peut comporter, pendant l'étape de disposer ladite au moins une bande d'un matériau prédéterminé autour dudit support de fabrication, une étape de positionner un insert prévu pour ménager une cavité de réception à l'intérieur de l'ébauche d'article.

L'insert peut être formé d'un matériau soluble, éliminable par procédé physico-chimique.

L'ébauche d'article est une ébauche d'un d'organe d'étanchéité dynamique annulaire du dispositif joint tournant.

L'ébauche d'article est une ébauche d'une première partie annulaire du dispositif joint tournant et/ou d'une ébauche d'une deuxième partie annulaire du dispositif joint tournant configurée pour être mobile en rotation par rapport à ladite première partie annulaire.

L'au moins une bande d'un matériau prédéterminé est fournie en rouleau ou en bande individuelle.

L'invention a aussi pour objet, encore sous un autre aspect, une installation d'exploitation de fluides, par exemple un hydrocarbure et notamment sur une plateforme offshore, comportant au moins un dispositif joint tournant ayant au moins un organe d'étanchéité dynamique logé à l'intérieur d'un espace d'écartement situé entre une première partie annulaire qui est assujettie à une tourelle d'amarrage fixe de ladite installation et une deuxième partie annulaire mobile en rotation par rapport à ladite première partie annulaire et qui est assujettie à un navire mobile de ladite installation, avec l'un au moins parmi l'organe d'étanchéité dynamique, la première partie et la deuxième partie qui est obtenu à partir d'une ébauche issue de la mise en œuvre du procédé décrit ci-dessus.

L'ébauche est formée par l'organe d'étanchéité dynamique et est fabriquée sur un support de fabrication formé directement par l'une ou l'autre de la première partie et de la deuxième partie.

Le support de fabrication peut être formé de plusieurs segments annulaires et placés temporairement et de manière in-situ entre deux dispositifs joint tournant assemblés l'un sur l'autre.

### Brève description des figures

On va maintenant poursuivre l'exposé de l'invention par la description d'exemples de réalisation, donnée ci-après à titre illustratif et non limitatif, en référence aux dessins annexés.
La figure 1 représente schématiquement et partiellement une installation d'exploitation de fluides sur une plateforme offshore, pourvue d'un navire, d'une tourelle d'amarrage, d'un réseau de canalisations subaquatiques permettant une communication fluidique pour le transfert du fluide entre le fond de la mer et le navire, et d'un dispositif joint tournant assurant l'étanchéité entre le navire et la tourelle et l'intégrité du transfert de fluides.
La figure 2 est une vue de dessus du dispositif joint tournant de l'installation illustrée sur la figure 1.
La figure 3 est une vue partielle en coupe du dispositif joint tournant, repérée III-III sur la figure 2.
La figure 4 est un schéma-blocs illustrant un procédé de fabrication d'une ébauche d'un article prévu pour équiper un dispositif joint tournant tel que celui des figures 1 à 3.
La figure 5 illustre très schématiquement un support de fabrication sur lequel est fabriqué l'ébauche d'article selon le procédé de la figure 4.

### Description détaillée

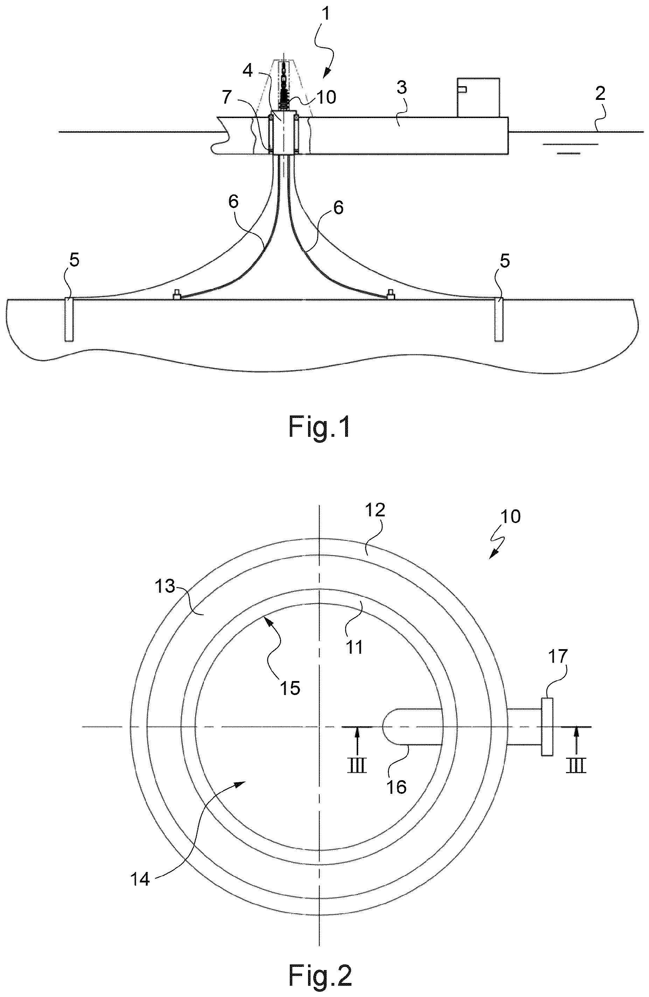

La figure 1 illustre une installation d'exploitation de fluides 1 sur une plateforme offshore, permettant l'exploitation de champs d'hydrocarbures en mer 2.

Cette installation 1, aussi appelée unité flottante de production, de stockage et de déchargement, peut être pourvue d'un navire 3 qui est mobile, du fait de son environnement formé par la mer 2, et d'une tourelle d'amarrage 4 qui est géostationnaire et autour duquel le navire 3 est mobile.

La tourelle d'amarrage 4 peut par exemple être assujettie mécaniquement au fond de la mer 2 via des ancres sous-marines 5.

Le navire 3 peut être mobile vis-à-vis de la tourelle d'amarrage 4 par le biais d'un mécanisme à roulements 7.

L'installation 1 peut être pourvue de conduits 6 qui forment un réseau de canalisations subaquatiques permettant une communication fluidique pour le transfert du fluide entre le fond de la mer et le navire 3.

Le fluide circulant dans les conduits 6 provient du fond de la mer 2.

L'installation 1 comporte un dispositif joint tournant 10 assurant l'étanchéité entre le navire 3 et la tourelle d'amarrage 4 et l'intégrité du transfert de fluides.

Le dispositif joint tournant 10 peut être formé d'un joint tournant (« *swivel device* » en terminologie anglo-saxonne) ou d'un empilement de tels joints (« *swivel stack device* » en terminologie anglo-saxonne).

Ainsi qu'illustré sur la figure 2, un tel dispositif joint tournant 10 est globalement annulaire et comporte une première partie annulaire 11, dite fixe, qui est configurée pour être assujettie à la tourelle d'amarrage 4, ainsi qu'une deuxième partie annulaire 12, dite mobile, qui est configurée pour être assujettie au navire 3.

Dans l'exemple décrit, la deuxième partie annulaire 12 est mobile en rotation par rapport à la première partie annulaire 11, par l'intermédiaire d'un organe à roulements 13 au moins partiellement interposé entre les première et deuxième parties annulaires 11 et 12.

Le dispositif joint tournant 10 présente un espace interne 14 défini ici par une surface interne 15 de la première partie annulaire 11.

L'installation 1 comporte en outre un conduit de transfert 16 raccordé, directement ou indirectement, à au moins un des conduits subaquatiques 6.

Le conduit de transfert 16 entre dans le dispositif joint tournant 10 par son espace interne 14 et débouche à l'extérieur du dispositif joint tournant 10 par un raccord de sortie 17.

Le conduit de transfert 16 traverse ainsi le dispositif joint tournant 10 en entrant dans la première partie annulaire 11 et en sortant par la deuxième partie annulaire 12.

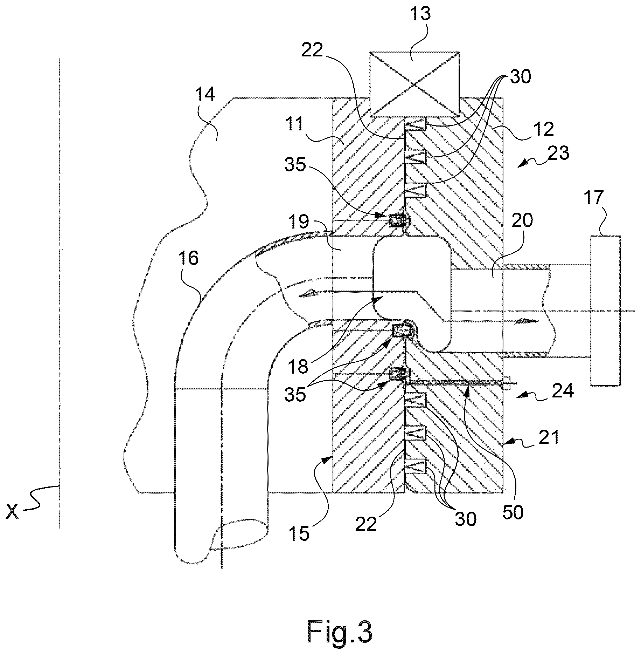

La figure 3 montre en coupe le dispositif joint tournant 10 de la figure 2 et illustre plus en détail le chemin fluidique au travers du dispositif joint tournant 10 et la coopération entre les première et deuxième parties annulaires 11 et 12.

Le dispositif joint tournant 10 est pourvu d'une chambre de transfert 18 formée partiellement par un premier orifice 19 ménagé dans la première partie annulaire 11 et par un deuxième orifice 20 ménagé dans la deuxième partie annulaire 12 et au moins partiellement en regard du premier orifice 19.

La chambre de transfert 18 est ici annulaire, ou toroïdale.

Le premier orifice 19 débouche au niveau de la surface interne 15 de la première partie annulaire 11 dans une première portion du conduit de transfert 16 située dans l'espace interne 14 du dispositif joint tournant 10 et qui est raccordée aux conduits subaquatiques 6.

Le deuxième orifice 20 débouche au niveau d'une surface externe 21 de la deuxième partie annulaire 12 dans une deuxième portion du conduit de transfert 16 située à l'extérieur du dispositif joint tournant 10 et qui comporte le raccord de sortie 17.

Une flèche illustrée sur la figure 3 montre le chemin fluidique emprunté par le fluide venant des conduits 6 et acheminé par le conduit de transfert 16 en traversant les première et deuxième parties annulaire 11 et 12 du dispositif joint tournant 10, jusqu'au raccord de sortie 17.

Le dispositif joint tournant 10 est en outre pourvu d'un espace d'écartement 22 situé entre la première partie annulaire 11 et la deuxième partie annulaire 12.

L'espace d'écartement 22 est prévu pour permettre la rotation de la deuxième partie annulaire 12 par rapport à la première partie annulaire 11.

Dans l'exemple décrit, l'espace d'écartement 22 est interrompu par la chambre de transfert 18.

Ainsi, sur une portion supérieure 23 du dispositif joint tournant 10, l'espace d'écartement 22 s'étend depuis l'organe à roulement 13 jusqu'à déboucher dans la chambre de transfert 18 ; tandis que sur une portion inférieure 24 du dispositif joint tournant 10, l'espace d'écartement 22 débouche à une extrémité dans la chambre de transfert 18 et débouche à une extrémité opposée à l'extérieur du dispositif joint tournant 10.

La chambre de transfert 18 est ici interposée entre les portions supérieure et inférieure 23 et 24.

En particulier, l'espace d'écartement 22 est ménagé entre une surface externe de la première partie annulaire 11, laquelle surface externe est opposée à sa surface interne 15, et une surface interne de la deuxième partie annulaire 12, laquelle surface interne est opposée à sa surface externe 21.

Le dispositif joint tournant 10 comporte des organes d'étanchéité dynamique 30 logés au moins partiellement à l'intérieur de l'espace d'écartement 22, dans les portions supérieure et inférieure 23 et 24 du dispositif joint tournant 10.

Ces organes d'étanchéité dynamique 30 sont prévus pour étancher l'espace d'écartement 22.

Ces organes d'étanchéité dynamique 30 peuvent comporter par exemple des lèvres ayant pour fonction d'assurer l'étanchéité face au fluide.

Dans l'exemple décrit, trois organes d'étanchéité dynamique 30 sont logés au moins partiellement à l'intérieur de l'espace d'écartement 22 dans la portion supérieure 23 du dispositif joint tournant 10 et trois organes d'étanchéité dynamique 30 sont logés au moins partiellement à l'intérieur de l'espace d'écartement 22 dans la portion inférieure 24 du dispositif joint tournant 10.

Le dispositif joint tournant 10 comporte ici en outre plusieurs dispositifs de protection 35 des organes d'étanchéité dynamique 30.

En variante, il pourrait y en avoir plus ou moins et pas nécessairement le même nombre dans les portions supérieure et inférieure.

Dans l'exemple décrit, un dispositif de protection 35 est logé au moins partiellement à l'intérieur de l'espace d'écartement 22 dans la portion supérieure 23 du dispositif joint tournant 10 et deux dispositifs de protection 35 sont logés au moins partiellement à l'intérieur de l'espace d'écartement 22 dans la portion inférieure 24 du dispositif joint tournant 10.

Le dispositif joint tournant 10 peut aussi comporter un dispositif de nettoyage 50 configuré pour évacuer des débris que peut comporter ledit fluide et qui est ici formé par un canal formé dans la deuxième partie annulaire 12 et qui débouche dans l'espace d'écartement 22 au niveau d'un dispositif de protection 35.

En variante, il pourrait y avoir plus ou moins de dispositifs de protection et/ou de dispositif de nettoyage, ou ne pas en avoir.

Dans une telle installation 1, les organes d'étanchéité dynamique 30 sont fabriqués à partir d'une ébauche, dite aussi brut de fabrication.

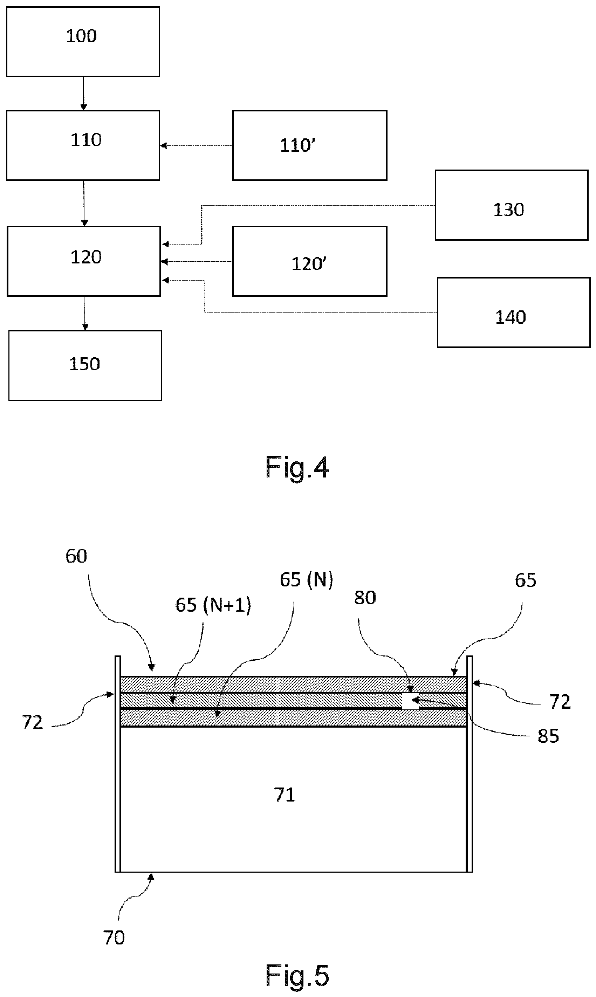

Les figures 4 et 5 montrent un procédé de fabrication d'une telle ébauche 60.

Cette ébauche 60 peut présenter des dimensions permettant d'y fabriquer, par exemple par usinage, un ou plusieurs organes d'étanchéité dynamique 30.

Plus généralement, il peut s'agir d'une ébauche d'un article configuré pour équiper le dispositif joint tournant, lequel article peut être formé par un organe d'étanchéité dynamique, ou bien par au moins l'une ou l'autre des première et deuxième parties annulaires, voire par d'autres pièces telles que les conduits de transfert.

Cette ébauche 60 peut être réalisée en matériau prédéterminé et notamment un polymère de synthèse.

En particulier, le matériau prédéterminé est formé d'au moins un thermoplastique, de préférence composé d'au moins du polyétheréthercétone, dénommé PEEK et/ou matériaux dérivés, voire optionnellement aussi d'au moins du polytétrafluoroéthylène, dénommé PTFE, et/ou matériaux dérivés.

L'ébauche 60 peut aussi comporter des fibres à hautes résistances et/ou des fils métalliques.

L'ébauche 60 peut aussi comporter un adhésif liant les différents matériaux.

En référence aux figures 4 et 5, le procédé de fabrication de l'ébauche 60 comporte l'étape 100 de fournir au moins une bande 65 d'un matériau prédéterminé, notamment visé ci-dessus, et en particulier de PEEK.

Il peut s'agir d'une bande 65 fournie en rouleau ou d'une pluralité de bandes individuelles.

Le procédé de fabrication de l'ébauche 60 comporte en outre l'étape 110 de fournir au moins un support de fabrication 70 au moins partiellement annulaire et ayant un diamètre externe prédéterminé.

Le support de fabrication 70 peut être formé en une seule pièce annulaire, ou en plusieurs segments annulaires.

Le support de fabrication 70 comporte ici un mandrin principal 71 et des flasques latéraux 72.

Le procédé de fabrication de l'ébauche 60 comporte en outre l'étape 120 de disposer la ou les bandes 65 autour du mandrin principal 71 et entre les flasques latéraux 72 du support de fabrication 70 jusqu'à obtenir une épaisseur prédéterminée sur ce support.

Optionnellement, le procédé de fabrication de l'ébauche 60 peut comporter l'étape 110' de fournir une pluralité de bandes de matériaux différents, par exemple en PEEK et/ou en PTFE et/ou avec des fibres à hautes résistances et/ou avec des fils métalliques et l'étape de disposer 120' successivement, séquentiellement, ou en parallèle, de manière superposée et/ou juxtaposée, les bandes de matériaux différents sur le support de fabrication.

L'étape 120, 120' de disposer la ou les bandes 65 autour du support de fabrication 70 peut être réalisée sous-vide.

L'étape 120, 120' de disposer la ou les bandes 65 autour du support de fabrication 70 peut être réalisée sous une température prédéterminée, par exemple proche d'un température de transition vitreuse du matériau prédéterminé.

Optionnellement, le procédé de fabrication de l'ébauche 60 peut comporter, pendant l'étape 120, 120' de disposer la ou les bandes 65 autour du support de fabrication 70, une étape 130 de soudage et/ou d'adhérisation d'une couche inférieure formée par une bande N avec une couche supérieure formée par une bande N+1, de sorte à renforcer la liaison mécanique entre les bandes superposées.

Cette même étape 130 de soudage et/ou d'adhérisation peut être réalisée sur des bandes disposées adjacentes, ou de manière juxtaposée.

Il pourrait par exemple s'agir d'un soudage du type laser ou du type à ultrasons.

Optionnellement encore, le procédé de fabrication de l'ébauche 60 peut comporter, pendant l'étape 120, 120' de disposer la ou les bandes 65 autour du support de fabrication 70, une étape 140 de positionner un insert 80.

L'insert 80 peut être formé d'un matériau soluble, éliminable par procédé physico-chimique
Un tel insert 80 peut être prévu pour ménager une cavité 85 de réception à l'intérieur de l'ébauche 60.

Cette cavité 85 peut permettre de ménager une forme particulière de l'organe d'étanchéité dynamique, ou peut être prévue pour y loger par exemple un organe de contrôle de cet organe d'étanchéité dynamique.

Le procédé de fabrication de l'ébauche 60 comporte en outre l'étape 150 de retirer le support de fabrication 70 pour obtenir l'ébauche 60 avec une largeur et une épaisseur prédéterminées, c'est-à-dire une section prédéterminée.

Dans l'exemple illustré, le support de fabrication 70 sur lequel est fabriqué l'ébauche 60 est une pièce indépendante et distincte du dispositif joint tournant.

En variante, le support de fabrication peut être formé directement par l'une ou l'autre de la première partie annulaire et de la deuxième partie annulaire.

En d'autres termes, l'ébauche pourrait même être fabriquée directement en condition d'utilisation, sur le dispositif joint tournant équipant l'installation.

En variante, le support de fabrication peut être formé de plusieurs segments annulaires qui sont placés temporairement et de manière in-situ entre deux dispositifs joint tournant 10, eux-mêmes assemblés l'un sur l'autre. Le procédé décrit ci-dessus permet de réaliser de manière simple et commode une ébauche d'un article annulaire prévu pour équiper un dispositif joint tournant, en disposant simplement sur un support dédié, la ou les bandes d'un matériau prédéterminé.

Plus généralement, l'invention trouve une application dans les navires ou unités flottantes du domaine de l'offshore permettant la production et/ou la transformation et/ou le traitement et/ou le stockage et/ou le déchargement de fluides et/ou d'énergie notamment électrique et/ou de signaux.

Plus généralement, l'invention ne se limite pas aux exemples décrits et représentés.

## Revendications

1. Procédé de fabrication d'une ébauche (60) d'un article configuré pour équiper un dispositif joint tournant (10) d'une installation d'exploitation de fluides (1), notamment sur une plateforme offshore, le procédé est **caractérisé en ce qu'**il comporte les étapes suivantes :
- fournir (100) au moins une bande (65) d'un matériau prédéterminé
- fournir (110) au moins un support de fabrication (70) au moins partiellement annulaire et ayant un diamètre externe prédéterminé ;
- disposer (120, 120') ladite au moins une bande d'un matériau prédéterminé autour dudit support de fabrication jusqu'à obtenir une épaisseur prédéterminée ;
- retirer (150) le support de fabrication pour obtenir ladite ébauche d'article ayant une section prédéterminée.

2. Procédé selon la revendication 1, **caractérisé en ce qu'**il comporte l'étape de fournir (110') une pluralité de bandes de matériaux différents et l'étape de disposer (120') successivement, séquentiellement, ou en parallèle, de manière superposée et/ou juxtaposée, les bandes de matériaux (65) différents sur le support de fabrication.

3. Procédé selon l'une des revendications 1 et 2, **caractérisé en ce que** le matériau prédéterminé est composé de polyétheréthercétone, dénommé PEEK et/ou de matériaux dérivés.

4. Procédé selon la revendication 3, **caractérisé en ce que** le matériau prédéterminé est en outre composé de polytétrafluoroéthylène, dénommé PTFE et/ou de matériaux dérivés.

5. Procédé selon l'une quelconque des revendications 1 à 4, **caractérisé en ce qu'**il comporte l'étape de disposer (120, 120') sous-vide ladite au moins une bande (65) d'un matériau prédéterminé autour dudit support de fabrication (70).

6. Procédé selon l'une quelconque des revendications 1 à 5, **caractérisé en ce qu'**il comporte l'étape de disposer (120, 120') sous une température prédéterminée ladite au moins une bande (65) d'un matériau prédéterminé autour dudit support de fabrication (70).

7. Procédé selon l'une quelconque des revendications 1 à 6, **caractérisé en ce qu'**il comporte, pendant l'étape de disposer (120, 120') ladite au moins une bande (65) d'un matériau prédéterminé autour dudit support de fabrication, une étape de soudage et/ou d'adhérisation (130) d'une couche inférieure formée par la bande avec une couche supérieure formée par la bande.

8. Procédé selon l'une quelconque des revendications 1 à 7, **caractérisé en ce que** le support de fabrication (70) est formé en une seule pièce annulaire, ou de plusieurs segments annulaires.

9. Procédé selon l'une quelconque des revendications 1 à 8, **caractérisé en ce qu'**il comporte, pendant l'étape de disposer (120, 120') ladite au moins une bande (65) d'un matériau prédéterminé autour dudit support de fabrication, une étape de positionner (140) un insert (80) prévu pour ménager une cavité de réception (85) à l'intérieur de l'ébauche (60) d'article.

10. Procédé selon la revendication 9, **caractérisé en ce que** l'insert (80) est formé d'un matériau soluble.

11. Procédé selon l'une quelconque des revendications 1 à 10, **caractérisé en ce que** l'ébauche (60) d'article est une ébauche d'un d'organe d'étanchéité dynamique annulaire (30) du dispositif joint tournant (10), ou l'ébauche d'article est une ébauche d'une première partie annulaire (11) du dispositif joint tournant et/ou d'une ébauche d'une deuxième partie annulaire (12) du dispositif joint tournant configurée pour être mobile en rotation par rapport à ladite première partie annulaire.

12. Procédé selon l'une quelconque des revendications 1 à 11, **caractérisé en ce que** l'au moins une bande (65) d'un matériau prédéterminé est fournie en rouleau ou en bande individuelle.

13. Installation d'exploitation de fluides, par exemple un hydrocarbure et notamment sur une plateforme offshore, comportant au moins un dispositif joint tournant (10) ayant au moins un organe d'étanchéité dynamique (30), l'installation se **caractérise en ce que** l'organe d'étanchéité dynamique est logé à l'intérieur d'un espace d'écartement (22) situé entre une première partie annulaire (11) qui est assujettie à une tourelle d'amarrage (7) fixe de ladite installation (1) et une deuxième partie annulaire (12) mobile en rotation par rapport à ladite première partie annulaire et qui est assujettie à un navire (3) mobile de ladite installation, avec l'un au moins parmi l'organe d'étanchéité dynamique, la première partie et la deuxième partie qui est obtenu à partir d'une ébauche issue de la mise en œuvre du procédé de fabrication selon l'une quelconque des revendications 1 à 12.

14. Installation selon la revendication 13, **caractérisé en ce que** ladite ébauche (60) est formée par l'organe d'étanchéité dynamique (30) et est fabriquée sur un support de fabrication (70) formé directement par l'une ou l'autre de la première partie (11) et de la deuxième partie (12), ou un support de fabrication placé entre deux dispositifs joint tournant qui sont assemblés l'un sur l'autre.

## Patentansprüche

1. Verfahren zur Herstellung eines Rohlings (60) eines Artikels, der so eingerichtet ist, dass er eine Drehgelenkvorrichtung (10) mit einer Fluidverarbeitungsanlage (1) ausstattet, insbesondere auf einer Offshore-Plattform, wobei das Verfahren folgende Schritte umfasst:
- Bereitstellen (100) mindestens eines Streifens (65) aus einem vorbestimmten Material
- Bereitstellen (110) mindestens eines mindestens teilweise ringförmigen Fertigungsträgers (70), der einen vorbestimmten AussDurchmesser aufweist;
- Anordnen (120, 120') des mindestens eines Streifens eines vorbestimmten Materials um den Fertigungsträger, bis eine vorbestimmte Dicke erreicht ist;
- Entfernen (150) des Fertigungsträgers, um den Artikelrohling mit einem vorbestimmten Querschnitt zu erhalten.

2. Verfahren nach Anspruch 1, **dadurch gekennzeichnet, dass** es den Schritt des Bereitstellens (110') einer Vielzahl von Streifen unterschiedlicher Materialien und den Schritt des aufeinanderfolgenden, sequenziellen oder parallelen Anordnens (120') der Streifen aus unterschiedlichen Materialien (65) auf dem Fertigungsträger in überlagerter und/oder nebeneinanderliegender Weise umfasst.

3. Verfahren nach einem der Ansprüche 1 und 2, **dadurch gekennzeichnet, dass** das vorbestimmte Material aus Polyetheretherketon, PEEK genannt, und/oder abgeleiteten Materialien besteht.

4. Verfahren nach Anspruch 3, **dadurch gekennzeichnet, dass** das vorbestimmte Material ferner aus Polytetrafluorethylen, PTFE genannt, und/oder abgeleiteten Materialien besteht.

5. Verfahren nach einem der Ansprüche 1 bis 4, **dadurch gekennzeichnet, dass** es den Schritt des Anordnens (120, 120') des mindestens einen Streifens (65) aus einem vorbestimmten Material unter Vakuum um den Fertigungsträger (70) umfasst.

6. Verfahren nach einem der Ansprüche 1 bis 5, **dadurch gekennzeichnet, dass** es den Schritt des Anordnens (120, 120') des mindestens einen Streifens (65) aus einem vorbestimmten Material bei einer vorbestimmten Temperatur um den Fertigungsträger (70) umfasst.

7. Verfahren nach einem der Ansprüche 1 bis 6, **dadurch gekennzeichnet, dass** es während des Schritts des Anordnens (120, 120') des mindestens einen Streifens (65) aus einem vorbestimmten Material um den Fertigungsträger einen Schritt des Verschweißens und/oder Verklebens (130) einer von dem Streifen gebildeten unteren Schicht mit einer von dem Streifen gebildeten oberen Schicht umfasst.

8. Verfahren nach einem der Ansprüche 1 bis 7, **dadurch gekennzeichnet, dass** der Fertigungsträger (70) aus einem einzigen Ringstück oder aus mehreren Ringsegmenten gebildet ist.

9. Verfahren nach einem der Ansprüche 1 bis 8, **dadurch gekennzeichnet, dass** es während des Schritts des Anordnens (120, 120') des mindestens einen Streifens (65) eines vorbestimmten Materials um den Fertigungsträger einen Schritt des Positionierens (140) eines Einsatzes (80) umfasst, der vorgesehen ist, um einen Aufnahmehohlraum (85) innerhalb des Artikelrohlings (60) zu schaffen.

10. Verfahren nach Anspruch 9, **dadurch gekennzeichnet, dass** der Einsatz (80) aus einem löslichen Material gebildet ist.

11. Verfahren nach einem der Ansprüche 1 bis 10, **dadurch gekennzeichnet, dass** der Artikelrohling (60) ein Rohling eines dynamischen ringförmigen Dichtungselements (30) der Drehgelenkvorrichtung (10) ist, oder ein Rohling eines ersten ringförmigen Teils (11) der Drehgelenkvorrichtung (10) und/oder ein Rohling eines zweiten ringförmigen Teils (12), der relativ zu dem ersten ringförmigen Teil (11) drehbar ist.

12. Verfahren nach einem der Ansprüche 1 bis 11, **dadurch gekennzeichnet, dass** der mindestens eine Streifen (65) eines vorbestimmten Materials als Rolle oder als einzelnes Band bereitgestellt wird.

13. Fluidverarbeitungsanlage, beispielsweise eines Kohlenwasserstoffs und insbesondere auf einer Offshore-Plattform, die mindestens eine Drehgelenkvorrichtung (10) mit mindestens einem dynamischen Dichtelement (30) aufweist, wobei die Anlage **dadurch gekennzeichnet ist, dass** das dynamische Dichtelement in einem Zwischenraum (22) untergebracht ist, der sich zwischen einem ersten ringförmigen Teil (11), das an einem festen Festmachturm (7) der Anlage (1) befestigt ist, und einem zweiten ringförmigen Teil (12) befindet, der relativ zu dem ersten ringförmigen Teil drehbar ist und an einem beweglichen Schiff (3) der Anlage befestigt ist, wobei mindestens eines des dynamischen Dichtelements, des ersten Teils und des zweiten Teils aus einem Rohling hergestellt wird, der aus der Durchführung des Herstellungsverfahrens gemäß einem der Ansprüche 1 bis 12 hervorgeht.

14. Anlage nach Anspruch 13, **dadurch gekennzeichnet, dass** der Rohling (60) durch das dynamische Dichtelement (30) gebildet und auf einem Fertigungsträger (70) hergestellt wird, der direkt durch den einen oder den anderen des ersten Teils (11) und des zweiten Teils (12) gebildet wird, oder auf einem Fertigungsträger, der zwischen zwei Drehgelenkvorrichtungen platziert ist, die aneinander montiert sind.

## Claims

1. Process for producing a blank (60) from an item that is configured to equip a rotating-joint device (10) of an installation for mining fluids (1), in particular on an offshore platform, the process is **characterized in that** it comprises the following steps:
- Providing (100) at least one strip (65) of a predetermined material;
- Providing (110) at least one production support (70) that is at least partially annular and that has a predetermined outer diameter;
- Arranging (120, 120') said at least one strip of a predetermined material around said production support until a predetermined thickness is obtained;
- Removing (150) the production support to obtain said item blank that has a predetermined cross-section.

2. Process according to Claim 1, **characterized in that** it comprises the step of providing (110') multiple strips of different materials and the step of arranging (120') the strips of different materials (65) on the production support successively, sequentially, or in parallel, in a superposed and/or juxtaposed manner.

3. Process according to one of Claims 1 and 2, **characterized in that** the predetermined material consists of polyether ether ketone, referred to as PEEK, and/or derivative materials.

4. Process according to Claim 3, **characterized in that** the predetermined material also consists of polytetrafluoroethylene, referred to as PTFE, and/or derivative materials.

5. Process according to any of Claims 1 to 4, **characterized in that** it comprises the step of arranging (120, 120') said at least one strip (65) of a predetermined material around said production support (70) under vacuum conditions.

6. Process according to any of Claims 1 to 5, **characterized in that** it comprises the step of arranging (120, 120') said at least one strip (65) of a predetermined material around said production support (70) under a predetermined temperature.

7. Process according to any of Claims 1 to 6, **characterized in that** it comprises, during the step of arranging (120, 120') said at least one strip (65) of a predetermined material around said production support, a step of welding and/or bonding (130) a lower layer formed by the strip with an upper layer formed by the strip.

8. Process according to any of Claims 1 to 7, **characterized in that** the production support (70) is formed by a single annular piece or multiple annular segments.

9. Process according to any of Claims 1 to 8, **characterized in that** it comprises, during the step of arranging (120, 120') said at least one strip (65) of a predetermined material around said production support, a step of positioning (140) an insert (80) designed to house a receiving cavity (85) inside the item blank (60).

10. Process according to Claim 9, **characterized in that** the insert (80) is formed from a soluble material.

11. Process according to any of Claims 1 to 10, **characterized in that** the item blank (60) is a blank of an annular dynamic sealing element (30) of the rotating-joint device (10), or the item blank is a blank of a first annular part (11) of the rotating-joint device and/or a blank of a second annular part (12) of the rotating-joint device configured to rotate relative to said first annular part.

12. Process according to any of Claims 1 to 11, **characterized in that** the at least one strip (65) of a predetermined material comes as a roll or individual strip.

13. Installation for mining fluids, for example a hydrocarbon, and in particular on an offshore platform, comprising at least one rotating-joint device (10) that has at least one dynamic sealing element (30), the installation is **characterized in that** the dynamic sealing element is housed inside a separating space (22) located between a first annular part (11) that is secured to a stationary mooring turret (7) of said installation (1) and a second annular part (12) that rotates relative to said first annular part and that is secured to a mobile ship (3) of said installation, with at least one from among the dynamic sealing element, the first part and the second part that is obtained from a blank resulting from the implementation of the producing process according to any one of claims 1 to 12.

14. Installation according to Claim 13, **characterized in that** said blank (60) is formed by the dynamic sealing element (30) and is produced on a production support (70) formed directly by one or the other of the first part (11) and the second part (12), or a production support placed between two rotating-joint devices that are assembled one on the other.
